# EUROPEAN PATENT APPLICATION

(11) **EP 2 515 503 A1**
(43) Date of publication of application: **24.10.2012**
(21) Application number: 11305470.4
(22) Date of filing: 19.04.2011
(51) Int. Cl.: H04L 29/08, G06F 9/445

(54) **Method of managing data sent to a secure element via a HTTP response message**

(71) Applicant: Gemalto SA, 92190 Meudon (FR)
(72) Inventor: Imoucha, Franck, 13390 Auriol (FR); Barras, Cyril, 83470 Saint Maximin la Ste Baume (FR); Nishi, Kenji, 92130 Issy les Moulineaux (FR)

(57) **Abstract**

The invention is a method of managing data sent by a server (SR) to a portable secure element (SC) connected to a host device (HM). Said data is sent through a HTTP Response message (PR) comprising a plurality of commands. Said method comprises the steps of:
- activating a buffering mode if a start indicator is detected in the HTTP Response message (PR),
- executing a command of a preset type as long as the buffering mode is not active,
- storing a command of the preset type without executing if the buffering mode is active,
- executing the stored commands if an end indicator is detected.

## Description

### (Field of the invention)

The present invention relates to methods of managing data sent to a secure element through a HTTP Response message. In particular, the present invention is well suited for sending data from a remote server to a secure element like a smart card.

### (Background of the invention)

A secure element is a component which is able to allow or deny access to the data it contains. A secure element may be a device such as a smart card and may contain applications in the form of applets. These applets may be accessed by a remote server via an over the air channel, known as OTA. OTA mechanism is defined by the ETSI SCP 102.225 and ETSI-SCP 102.226 standards. The OTA channel allows accessing data and applications which have been specifically developed for SIM cards. Smart cards intended to be used in Telecom domain are able to manage an OTA communication. In particular SIM cards offer OTA features. On the contrary smart cards intended to be used in domain such as Banking, Loyalty, or Security access do not offer OTA features. These smart cards may be accessed through a n I/O communication channel in contact mode or in contactless mode. All these cards may be accessed through the Hypertext Transfer Protocol (HTTP). A server may load and install a new application or an upgrade into a secure element. When a large amount of data is loaded from a distant server to a secure element, a failure may occur either during the data transmission or during the installation of data into the secure element. Each received data is treated by the secure element on the fly. At the present time, if an error is detected before the data installation is completed, then the server restarts a new full installation process and sends again the whole data to the secure element. Consequently, the same data is sent twice between the server and the secure element. Such a communication mechanism is time consuming and requires a large bandwidth on the used network.

There is a need to ensure that a batch of data has been correctly installed on a secure element when using the Hypertext Transfer Protocol.

### (Summary of the Invention)

An object of the invention is to solve the above mentioned technical problem.

The object of the present invention is a secure element intended to connect a host device. The portable secure element is intended to receive a HTTP Response message from a server. Said HTTP Response message is intended to comprise a plurality of commands. Said portable secure element comprises an agent which is adapted to detect a start indicator and to detect an end indicator in the HTTP Response message. Said agent is adapted to activate a buffering mode if a start indicator is detected. Said agent is adapted to directly execute a command extracted from the HTTP Response message is said the extracted command has a preset type and if said buffering mode is not active. Said agent is adapted to store without executing a command extracted from the HTTP Response message if the extracted command has the preset type and if the buffering mode is active. Said agent is adapted to execute the stored commands if said agent detects an end indicator.

Advantageously, said agent may be able to store a description of an initial state of the secure element before executing the stored commands and the agent may be adapted to restore the secure element in the initial state if an error occurs during execution of the stored commands.

Advantageously, the HTTP Response message may comprises several commands of a plurality of types and the agent may handle all the commands contained in the message as commands of the preset type whatever their type.

Advantageously, the agent may be able to detect an abort indicator in the HTTP Response message and to deactivate the buffering mode if the agent detects an abort indicator.

Advantageously, the secure element may be intended to receive a plurality of HTTP Response messages and wherein the buffering mode may remain continuously active during the processing of several HTTP Response messages.

Advantageously, the agent may be able to detect a boundary field in the HTTP Response message, said boundary field defining a script separator, and the agent may be able to handle a script separator as an end indicator.

Advantageously, the secure element may comprise a plurality of applications, the agent may be adapted to detect a type field in the HTTP Response message, said type field indicating that the HTTP Response message contains several scripts which target different applications. The agent may be adapted to handle a plurality of scripts targeting said plurality of applications.

Advantageously, the agent may be able to deactivate the buffering mode if said agent detects an end indicator.

Another object of the invention is a method of managing data sent by a server to a portable secure element that is connected to a host device. Said data is sent through a HTTP Response message comprising a plurality of commands. The method comprises the steps of:
- activating a buffering mode if a start indicator is detected in the HTTP Response message,
- executing a command extracted from the HTTP Response message if the extracted command has a preset type and as long as the buffering mode is not active,
- storing a command extracted from the HTTP Response message without executing if said extracted command has the preset type and if the buffering mode is active,
- executing the stored command if an end indicator is detected.

Advantageously, the method may comprise the steps of:
- storing a description of an initial state of the secure element before executing the stored commands,
- restoring the secure element in the initial state if an error occurs during execution of the stored commands.

Advantageously, the HTTP Response message may comprise several commands of a plurality of types and the method may comprise the step of handling all the commands contained in the message as commands of the preset type whatever their type.

Advantageously, the method may comprise the step of deactivating the buffering mode if an abort indicator is detected.

Advantageously, the method may comprise the step of keeping the buffering mode continuously active during the processing of several received HTTP Response messages.

Advantageously, the plurality of received HTTP Response messages may target several distinct applications which are embedded in the secure element. The method may comprise the step of storing a plurality of commands targeting these embedded applications and the step of executing the plurality of stored commands in an atomic manner in order to ensure the consistency of data among these embedded applications.

Advantageously, the received HTTP Response messages may comprise a boundary field which defines a script separator and the method may comprise the step of handling a script separator as an end indicator.

Advantageously, the method may comprise the step of handling the end of a received HTTP Response message as an end indicator.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a secure element connected to a host device and an example of communication exchanges between a distant server and the secure device according to the invention;
- Figure 2 is an example of message sent from a sever to a secure element according to the invention; and
- Figure 3 is an example of two consecutive messages sent by a server to a secure element according to the invention,
- Figure 4 is another example of two consecutive messages sent by a server to a secure element according to the invention, and
- Figure 5 is an example of a composite message sent by a server to a secure element according to the invention.

### (Detailed description of the preferred embodiments)

The invention may apply to any types of secure element able to manage a HTTP or HTTPS communication session with a distant server through a connected host device. In particular, the secure element (or secure device) may be a SIM card which communicates through an Over-The-Air (OTA) session. The secure element may also be a Machine-To-Machine (M2M) device. The secure element may be a portable device providing secured storage features, access features, banking features, gaming features or any kind of services.

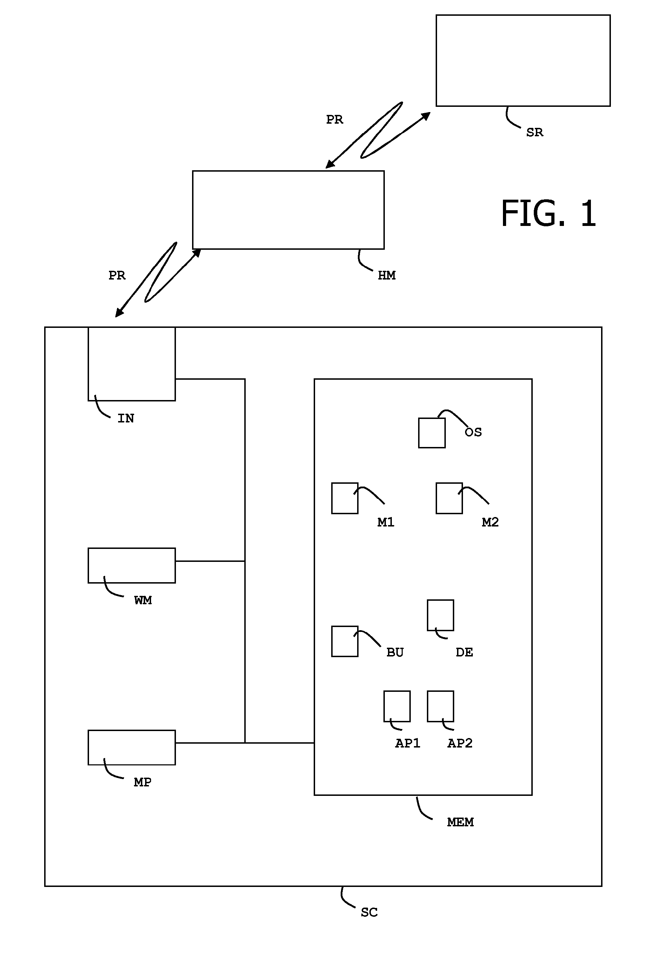

**Figure 1** shows the architecture of a secure element SC of SIM card type according to a preferred embodiment of the invention.

The portable electronic element SC comprises a working memory WM of RAM type, a non volatile memory MEM, a microprocessor MP and a communication interface IN. The non volatile memory MEM comprises an operating system OS, a buffer BU, a state description field DE, two applications AP1 and AP2 and two means M1 and M2.

The buffer BU is a memory area dedicated to the storage of temporary data coming from the server SR.

The memory MEM may be implemented as any combinations of one or several memory components. The memory MEM may be NAND flash or EEPROM memory or another type of non volatile memory.

The SIM card SC is able to exchange messages with a telecom handset HM through the communication interface IN. The telecom handset HM is able to exchange messages with a distant server SR via the OTA mechanism. The server SR and the secure element SC may communicate through the host device HM. In particular the secure element SC may send a HTTP POST message to the server SR and the server SR may send a HTTP POST Response message PR to the secure element SC.

The two applications AP1 and AP2 are intended to provide services for the user of the secure element SC. For instance, the application AP1 may be a transport application providing access to a public transport and the application AP2 may be a purse.

In one example, the operating system OS may comprise a Javacard ® virtual machine and the applications AP1 and AP2 may be applets.

The means M2 is able to manage OTA and HTTP sessions.

The means M1 is able to manage the data received from the server SR. The means M1 is also called the agent M1. The means M1 is able to detect several types of indicators in a HTTP Response message PR sent by the server SR. Notably the means M1 can detect a start indicator IS and an end indicator IE in HTTP Response messages. The start indicator IS may be a dedicated field which comprises a first preset value. Alternatively, the start indicator IS may be a specific command. The end indicator IE may be another dedicated field which comprises a second preset value. Alternatively, the end indicator IE may be a specific command.

The means M1 is able to activate a buffering mode if a start indicator IS is detected in a received HTTP response message.

The agent M1 directly analyses the received HTTP response message PR so as to identify every command contained in the message PR. The means M1 executes on the fly all found commands if the buffering mode is not active.

When the means M1 found a command which has a preset type, the means M1 is able to record the found command without executing if the buffering mode is active. The means M1 may use the buffer BU for storing the found command of the preset type. For instance, the means M1 may be customized so that only command that performs and update of data are stored in the buffer BU.

The means M1 is able to execute the commands stored in the buffer BU when it detects an end indicator IE in a HTTP response message.

In one embodiment, the means M1 is able to store a description of the initial state of the secure element. This initial state corresponds to the state of the element SC before the execution of the commands stored in the buffer BU. The means M1 is able to restore the initial state of the secure element SC in case of error during execution of the stored commands. This mechanism is similar to a rollback mechanism. The means M1 is able to ensure that either none of the stored commands is executed or all the stored commands are executed. The description of the initial state (i.e. the internal context of the secure element) may be stored into the field DE.

When the execution of all commands stored into the buffer BU is completed the means M1 is able to erase the content of the buffer BU.

Advantageously, the means M1 may be able to detect an abort indicator IA in a HTTP response message. The means M1 is able to deactivate the buffering mode and to empty the buffer BU when it detects an abort indicator IA in a received HTTP response message. Thus the means M1 may abandon the stored commands without executing these commands. The abort indicator IA may be a predefined field or a predefined dedicated command.

In one embodiment, the means M1 stores in the buffer BU all the commands found in the received HTTP message whatever their type.

In one embodiment, the means M1 is able to detect a boundary field BO in the HTTP response message. This boundary field BO is set with a value which is used as separator between several parts of the HTTP response message. For instance, the HTTP response message may comprise several scripts and the separator is intended to be found between the scripts. The means M1 may interpret each separator as an end indicator. In this case, the content of the buffer BU is executed each time the means M1 encounters a separator. Advantageously, the means M1 may be able to detect a type field CT in the HTTP response message. The presence of the type field CT may indicates that the HTTP response message comprise a plurality of batches of data. For example, each batch may be a script targeting an application into the secure element SC.

For instance the HTTP Response message PR may be a HTTP POST Response message as follow:
"HTTP/1.1 200 OK
X-Admin-Protocol: globalplatform-remote-admin/1.0
**Content-Type: multipart/mixed; boundary=VTtcXXcp**
Content-Length: 11812
**-- VTtcXXcp**
Content-Type: application/vnd.etsi.scp.commanddata;
version= 1.0
X-Admin-Targeted-Application: RFM1 AID1
X-Admin-Script-Buffering: true
... [First Batch of commands]
**-- VTtcXXcp**
Content-Type: application/vnd.etsi.scp.commanddata;
version= 1.0
X-Admin-Targeted-Application: RFM2 AID2
... [Second Batch of commands]
**-- VTtcXXcp**
Content-Type: application/globalplatform.card-content.. ;
X-Admin-Targeted-Application: SD1
... [Third Batch of commands]
**-- VTtcXXcp"**
where "Content-Type: multipart/mixed" is the type field CT which explains that the message PR contains several scripts,
where "boundary" is the boundary field BO which specifies the value "VTtcXXcp" as being the script separator,
and where "X-Admin-Script-Buffering: true" is the start indicator IS.

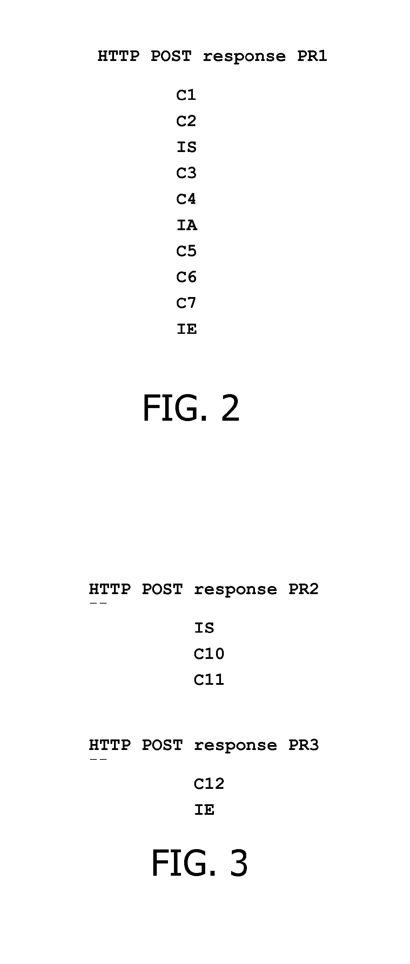

**Figure 2** shows an example of a HTTP POST response message PR1 sent from the server SR to the secure element SC according to the invention.

The message PR1 contains a script targeting an application embedded in the secure element SC. The message PR1 comprises the following sequence: a command C1, a command C2, a Start indicator IS, a command C3, a command C4, an Abort indicator IA, a command C5, a command C6, a command C7 and a End indicator IE.

The commands C1, C4, C5 and C7 are assumed to be update commands. (i.e. command of the "update" type). The other commands are assumed to have a type different from the type "update". The Start indicator IS is assumed to target the commands having an "update" type only. The buffering mode of the secure element SC is assumed to be disabled by default. The buffer BU is assumed to be empty by default.

When the secure element SC receives the message PR1, the means M1 directly executes the command C1 since the buffering mode is deactivated. Then the means M1 directly executes the command C2. Then the means M1 detects the Start indicator IS and activates the buffering mode. Then the means M1 directly executes the command C3 whose type is different from "update". Then the means M1 stores the command C4 in the buffer BU since the command C4 has a "update" type. The means M1 does not execute the command C4. Then the means M1 detects the Abort indicator IA and clears the buffer BU. As a result the command C4 is never executed.

The means M1 is assumed to be set so as to keep the buffering mode active even is the Abort indicator IA is found.

Then the means M1 stores the command C5 in the buffer BU since this command has a "update" type.

Then the means M1 directly executes the command C6 whose type is different from "update".

Then the means M1 stores the command C7 in the buffer BU since this command has a "update" type.

Then the means M1 detects the End indicator IE and executes the commands stored in the buffer BU in an atomic manner. In other words, the means M1 executes the commands C5 and C7 and guarantees that either both commands C5 and C7 are fully executed or none of these commands are executed. If an error occurs during the execution of command C5 or command C7, the means M1 restores the internal context of the secure element as if neither command C5 nor command C7 has been executed.

Alternatively, the means M1 may be set so as to deactivate the buffering mode when it detects the Abort indicator IA.

Alternatively, the message PR1 may contain no explicit end indicator IE and the means ME1 may interpret the end of the message PR1 itself as an end indicator IE.

**Figure 3** shows an example of two consecutive HTTP POST response messages PR2 and PR3 sent from the server SR to the secure element SC according to the invention.

The message PR2 contains a first script targeting the application AP1. The first script comprises the following sequence: a Start indicator IS, a command C10 and a command C11.

The message PR3 contains a second script targeting the application AP2. The second script comprises the following sequence: a command C12 and a an end indicator IE.

The commands C10, C11 and C12 are assumed to be update commands. The Start indicator IS is assumed to target the update commands. The buffering mode of the secure element SC is assumed to be disabled when the secure element SC received the message PR2.

When the secure element SC receives the message PR2, the means M1 detects the Start indicator IS and activates the buffering mode. Then the means M1 stores the commands C10 and C11 in the buffer BU. The means M1 detects the end of the message PR2. The means M1 keep the buffering mode active and let the buffer BU unchanged.

When the secure element SC receives the message PR3, the means M1 stores the command C12 in the buffer BU. Then the means M1 detects the end indicator IE and executes the three commands C10, C11 and C12 which are recorded in the buffer BU. Advantageously, these commands are performed in atomic way. Thus the scripts targeting the two applications AP1 and AP2 are executed in a linked manner. Such a mechanism allows ensuring the consistency of data stored in the two distinct applications.

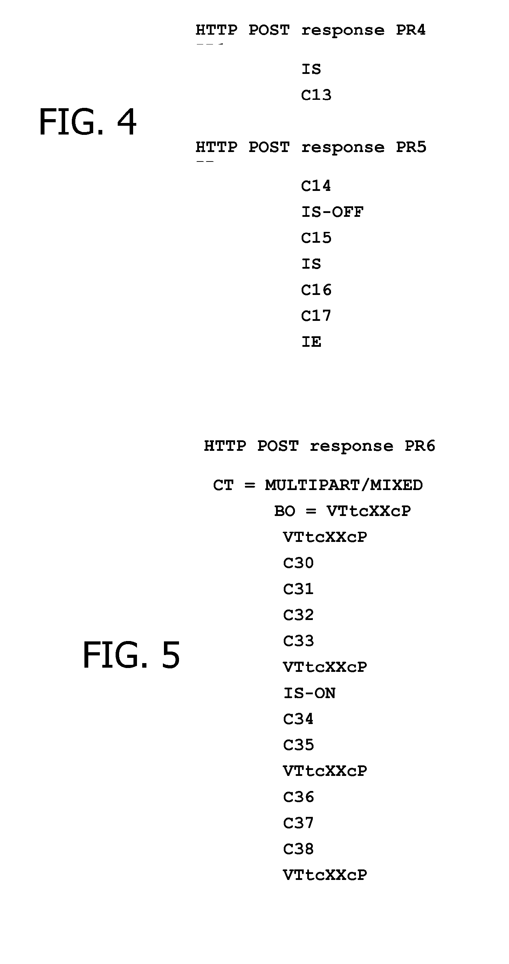

**Figure 4** shows another example of two consecutive HTTP POST response messages PR4 and PR5 sent from the server SR to the secure element SC according to the invention.

The message PR4 contains a first script which comprises the following sequence: a Start indicator IS and a command C13.

The message PR5 contains a second script that comprises the following sequence: a command C14, a deactivated Start indicator IS-OFF, a command C15, a Start indicator IS, a command C16, a command C17 and an end indicator IE.

The commands C13 to C17 are assumed to be update commands. The Start indicator IS is assumed to target the update commands. The buffering mode of the secure element SC is assumed to be disabled when the secure element SC received the message PR4. The buffer BU is assumed to be empty.

When the secure element SC receives the message PR4, the means M1 detects the Start indicator IS and activates the buffering mode. Then the means M1 stores the commands C13 in the buffer BU. The means M1 detects the end of the message PR4. The means M1 keeps the buffering mode active and let the buffer BU unchanged.

When the secure element SC receives the message PR5, the means M1 stores the command C14 in the buffer BU. Then the means M1 detects the deactivated Start indicator IS-OFF. Consequently, the means M1 deactivate the buffering mode and let the buffer BU unchanged. Then the means M1 detects and executes the command C15.

Then the means M1 detects the Start indicator IS and activates the buffering mode. Then the means M1 stores the commands C16 and C17 in the buffer BU.

Then the means M1 detects the end indicator IE and executes the four commands C13, C14, C16 and C17 which are recorded in the buffer BU. Preferably all theses commands are executed in an "all or nothing" mode. In other words, either the means M1 execute all the commands of the buffer BU or the secure element SC remains unchanged as if none of these commands were executed.

Optionally, the two messages PR4 and PR5 may originate from two distinct servers. Thus the content of the secure element SC is modified as if the messages sent by both servers were processed simultaneously in the secure element SC.

**Figure 5** shows an example of a composite message PR6 sent by the server SR to a secure device according to the invention.

The message PR6 contains three batches which may target either the same application or several applications embedded in the secure element SC.

The message PR6 comprises a type field CT which is set to the value "MULTIPART/MIXED". The presence of this type field CT means that the body of the message PR6 contains several parts (also named batches). The message PR6 comprises a boundary field BO which is set to "VTtcXXcP". In the example of Figure 5, the first part corresponds to a script targeting the application AP1, the second part corresponds to a script targeting the application AP2, and the third part corresponds to a script targeting a security domain as defined by GlobalPlatform V2.2 (or upper) specifications.

The first part comprises four commands C30 to C33. The second part comprises the following sequence: a Start indicator IS-ON and two commands C34 and C35. The third part comprises three commands C36 to C38.

The commands C30 to C38 are assumed to be "write" commands. The Start indicator IS-ON is assumed to target the command of "write" type. The buffering mode of the secure element SC is assumed to be disabled and the buffer BU is assumed to be empty when the secure element SC receives the message PR6.

When the secure element SC receives the message PR6, the means M1 detects the type field CT and the boundary field BO. Thus the means M1 can identify each of the batches comprised in the body of the message PR6.

Then the means M1 detects the first batch and executes the four commands C30 to C33 since the buffering mode is inactive. The means M1 executes these commands on the fly. That is to say the means M1 executes the commands one by one immediately upon receipt of each command.

Then the means M1 detects the second batch and the Start indicator IS-ON. The means M1 activates the buffering mode. Then the means M1 stores the commands C34 and C45 in the buffer BU. The means M1 detects the end of the second part thanks to the separator "VTtcXXcP".

In one embodiment, the means M1 considers the separator "VTtcXXcP" as an end indicator and executes the two stored commands C34 and C35. Then the means M1 erases the buffer BU.

In another embodiment, the means M1 does not consider the boundary "VTtcXXcP" as an end indicator and the buffer BU remains unchanged. In this embodiment, the two commands C34 and C35 will be executed when the means M1 detects the end of the message PR6.

In both embodiments, the buffering mode remains active between the second and third parts.

Then the means detects the third batch and stores the commands three C36 to C38 in the buffer BU. Then the means M1 detects the end of the third part and the end of the message PR6. Consequently, the means M1 executes all the commands stored in the buffer BU. Preferably, the execution of these command is carried out in atomic manner.

Alternatively, the commands C30 to C38 may be of any types. When the buffering mode is active, all commands of each part are stored in the buffer BU whatever their type.

Advantageously, the means M1 may store additional data into the buffer BU in order to be able to set the internal context of the secure element SC before the execution of each of the stored command. For example, the sequence of actions which allows selecting a file may be stored with an "Update record" command. For example, the sequence of commands allowing to grant the relevant rights may be stored in order to be performed before an "Update Binary" command.

Although the above described embodiments and examples rely on HTTP POST response messages, the invention also applies to any kind of HTTP messages. The invention also applies to HTTPS messages.

Although the above described embodiments and examples rely on a SIM secure device which communicates through OTA with a server, the invention also applies to any kind of communication channel established between the secure element and a server. The invention applies to remote or local sever.

## Claims

1. A secure element (SC) intended to be connected to a host device (HM), said portable secure element (SC) being intended to receive a HTTP Response message (PR) from a server (SR), said HTTP Response message (PR) being intended to comprise a plurality of commands,
**characterized in that** said portable secure element (SC) comprises an agent (M1) adapted to detect a start indicator (IS) and to detect an end indicator (IE) in the HTTP Response message (PR), **in that** said agent (M1) is adapted to activate a buffering mode if a start indicator (IS) is detected, **in that** said agent (M1) is adapted to directly execute a command (C1) of a preset type if said buffering mode is not active, **in that** said agent (M1) is adapted to store a command (C1) of the preset type without executing if the buffering mode is active, and **in that** said agent (M1) is adapted to execute the stored commands if said agent (M1) detects an end indicator (IE).

2. A secure element (SC) according to claim 1, wherein said agent (M1) is adapted to store a description (DE) of an initial state of the secure element (SC) before executing the stored commands and wherein the agent (M1) is adapted to restore the secure element (SC) in the initial state if an error occurs during execution of the stored commands.

3. A secure element (SC) according to one of claims 1 to 2, wherein the HTTP Response message (PR) comprises several commands of a plurality of types, and wherein said agent (M1) handles all the commands contained in the message (PR) as commands of the preset type whatever their type.

4. A secure element (SC) according to one of claims 1 to 3, wherein said agent (M1) is adapted to detect an abort indicator (IA) and wherein the agent (M1) is adapted to deactivate the buffering mode if said agent (M1) detects an abort indicator (IA).

5. A secure element (SC) according to one of claims 1 to 4, wherein said secure element (SC) is intended to receive a plurality of HTTP Response messages (PR1, PR2) and wherein the buffering mode remains continuously active during the processing of several HTTP Response messages (PR1, PR2).

6. A secure element (SC) according to one of claims 1 to 5, wherein said agent (M1) is adapted to detect a boundary field (BO) which defines a script separator (SE) and wherein said agent (M1) is adapted to handle a script separator (SE) as an end indicator (IE).

7. A secure element (SC) according to claim 6, wherein said secure element (SC) comprises a plurality of applications (AP1, AP2), wherein said agent (M1) is adapted to detect a type field (CT) which indicates that the HTTP Response messages contains several scripts targeting different applications and wherein said agent (M1) is adapted to handle a plurality of scripts targeting said plurality of applications (AP1, AP2).

8. A secure element (SC) according to one of claims 1 to 7, wherein said agent (M1) is adapted to deactivate the buffering mode if said agent (M1) detects an end indicator (IE).

9. A method of managing data sent by a server (SR) to a portable secure element (SC) connected to a host device (HM), said data being sent through a HTTP Response message (PR) comprising a plurality of commands,
**characterized in that** said method comprises the steps of:
- activating a buffering mode if a start indicator (IS) is detected in the HTTP Response message (PR),
- executing a command (C1) of a preset type as long as the buffering mode is not active,
- storing a command (C1) of the preset type without executing if the buffering mode is active,
- executing the stored command if an end indicator (IE) is detected.

10. A method according to claim 9, wherein the method comprises the steps of:
- storing a description (DE) of an initial state of the secure element (SC) before executing the stored commands,
- restoring the secure element (SC) in the initial state if an error occurs during execution of the stored commands.

11. A method according to any one of claims 9 to 10, wherein the HTTP Response message (PR) comprises several commands of a plurality of types and wherein said method comprises the step of handling all the commands contained in the message (PR) as commands of the preset type whatever their type.

12. A method according to any one of claims 9 to 11, wherein said method comprises the step of deactivating the buffering mode if an abort indicator (IA) is detected.

13. A method according to any one of claims 9 to 12, wherein said method comprises the step of keeping the buffering mode continuously active during the processing of several received HTTP Response messages (PR1, PR2).

14. A method according to claim 13, wherein the plurality of received HTTP Response messages (PR1, PR2) targets several distinct applications (AP1, AP2) embedded in the secure element (SC) and wherein said method comprises the step of storing a plurality of commands targeting said applications (AP1, AP2) and the step of executing said plurality of stored commands in an atomic manner in order to ensure the consistency of data among said applications (AP1, AP2).

15. A method according to any one of claims 9 to 14, wherein the received HTTP Response messages (PR1, PR2) comprise a boundary field (BO) which defines a script separator (SE) and wherein said method comprises the step of handling a script separator (SE) as an end indicator (IE).
